(19) **Europäisches Patentamt European Patent Office Office européen des brevets**

(11) **EP 3 115 717 A1**

(12) **EUROPEAN PATENT APPLICATION**
published in accordance with Art. 153(4) EPC

(43) Date of publication:
**11.01.2017 Bulletin 2017/02**

(51) Int Cl.:
*F25B 49/02* (2006.01)     *F24F 11/02* (2006.01)
*F25B 5/02* (2006.01)      *F25B 6/02* (2006.01)
*F25B 13/00* (2006.01)

(21) Application number: **15751768.1**

(22) Date of filing: **08.01.2015**

(86) International application number:
**PCT/JP2015/050355**

(87) International publication number:
**WO 2015/125509 (27.08.2015 Gazette 2015/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.02.2014   JP 2014028425**

(71) Applicant: **Toshiba Carrier Corporation
Kawasaki-shi, Kanagawa 212-8585 (JP)**

(72) Inventors:
• **HATADA, Takafumi
Fuji-shi
Shizuokab 416-8521 (JP)**
• **MIURA, Ken
Fuji-shi
Shizuokab 416-8521 (JP)**

(74) Representative: **Rehmann, Thorsten
Gramm, Lins & Partner
Patent- und Rechtsanwälte PartGmbB
Theodor-Heuss-Strasse 1
38122 Braunschweig (DE)**

(54) **REFRIGERATION CYCLE DEVICE**

(57)     According to one embodiment, a refrigeration cycle device includes a refrigeration cycle which returns a refrigerant discharged from a compressor to the compressor via a condenser, a plurality of expansion valves and a plurality of evaporators connected to the expansion valves, respectively. The refrigeration cycle device further includes a detector which predicts a first total degree of opening of the expansion valves at a first time point on the assumption that there is no refrigerant leakage in the refrigeration cycle, based on a change to a first state quantity of the refrigeration cycle at the first time point from a second state quantity of the refrigeration cycle at a second time point earlier than the first time point. The detector detects refrigerant leakage of the refrigeration cycle by comparing the first total degree of opening with a second total degree of opening which is an actual total degree of opening of the expansion valves at the first time point.

F I G. 5

**Description**

Technical Field

Embodiments described herein relate generally to a refrigeration cycle device which deals with the leakage of a refrigerant.

Background Art

In a refrigeration cycle which returns a refrigerant discharged from a compressor to the compressor via a condenser, a pressure reducer and an evaporator, the refrigerant may leak from, for example, a connection portion of pipes through which the refrigerant passes. The refrigeration cycle is required to detect such leakage of refrigerant accurately.

Citation List

Patent Literature

Patent Literature 1 JP 2008-164265 A

Summary of Invention

Technical Problem

Embodiments described herein aim to provide a refrigeration cycle device which is allowed to detect the leakage of a refrigerant accurately.

Means for Solving Problem

According to one embodiment, a refrigeration cycle device comprises a refrigeration cycle which returns a refrigerant discharged from a compressor to the compressor via a condenser, a plurality of expansion valves and a plurality of evaporators connected to the expansion valves, respectively. The refrigeration cycle device further comprises a detector which predicts a first total degree of opening of the expansion valves at a first time point on the assumption that there is no refrigerant leakage in the refrigeration cycle, based on a change to a first state quantity of the refrigeration cycle at the first time point from a second state quantity of the refrigeration cycle at a second time point earlier than the first time point. The detector detects refrigerant leakage of the refrigeration cycle by comparing the first total degree of opening with a second total degree of opening which is an actual total degree of opening of the expansion valves at the first time point.

Brief Description of Drawings

FIG. 1 is a block diagram showing the structure of a refrigeration cycle device according to a first embodiment.
FIG. 2 is a p-h chart showing the behavior of a refrigeration cycle in the first embodiment.
FIG. 3 shows the relationship between the progression of refrigerant leakage and the degree of opening of expansion valves in the refrigeration cycle.
FIG. 4 is shown for explaining an example of a method of detecting leakage in the first embodiment.
FIG. 5 is a flowchart showing an example of an operation which is performed when cooling is applied in the first embodiment.
FIG. 6 is a flowchart showing an example of an operation which is performed when heating is applied in the first embodiment.
FIG. 7 is a conceptual diagram showing an example of the relationship between the operating rate and the possibility of implementation of leakage determination in the above heating operation.
FIG. 8 is a flowchart showing an example of an operation of updating a setting value used for comparison with the operating rate.
FIG. 9 is shown for explaining an example of a method of detecting leakage in a second embodiment.
FIG. 10 shows the results of the calculation and measurement of the total amount of supercooling in the second embodiment.

FIG. 11 is a flowchart showing a modification example of an operation which is performed when cooling is applied.

FIG. 12 is a flowchart showing a modification example of an operation which is performed when heating is applied.

Mode for Carrying Out the Invention

Some embodiments will be described hereinafter with reference to the accompanying drawings. Each embodiment exemplarily shows a refrigeration cycle device mounted in an air conditioner.

[1] First Embodiment

A first embodiment is explained.

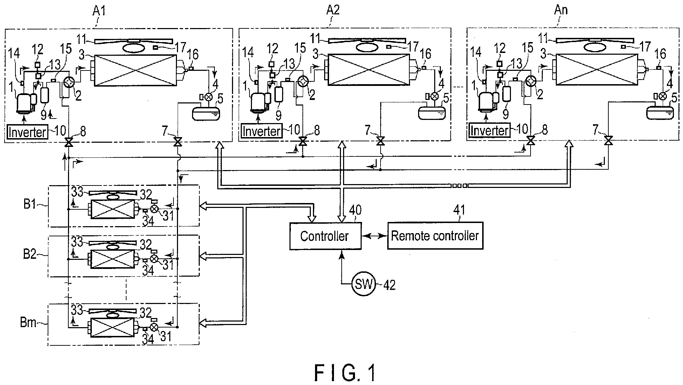

As shown in FIG. 1, an air conditioner comprises a plurality of outdoor units A1, A2, ... , An, and a plurality of indoor units B1, B2, ... , Bm. Thus, outdoor units A1 to An and indoor units B1 to Bm are provided in the multi-type air conditioner.

Each of outdoor units A1 to An comprises a compressor 1, a four-way valve 2, an outdoor heat exchanger 3, an outdoor expansion valve 4, a liquid receiver 5, packed valves 7 and 8, an accumulator 9, an inverter 10, an outdoor fan 11, pressure sensors 12 and 13, and temperature sensors 14, 15, 16 and 17. Each of indoor units B1 to Bm comprises an indoor expansion valve 31, an indoor heat exchanger 32, an indoor fan 33 and a temperature sensor 34.

In each of outdoor units A1 to An, the outdoor heat exchanger 3 is connected to the discharge hole of the compressor 1 via the four-way valve 2, using pipes. Packed valve 7 is connected to the outdoor heat exchanger 3 via the outdoor expansion valve 4 and the liquid receiver (in other words, the liquid tank) 5, using pipes.

The indoor expansion valves 31 of indoor units B1 to Bm are connected to packed valves 7 of outdoor units A1 to An, using pipes. In each of indoor units B1 to Bm, the indoor heat exchanger 32 is connected to the indoor expansion valve 31, using pipes. Packed valves 8 of outdoor units A1 to An are connected to the outdoor heat exchangers 32 of indoor units B1 to Bm, using pipes. In each of outdoor units A1 to An, the suction hole of the compressor 1 is connected to packed valve 8 via the four-way valve 2 and the accumulator 9, using pipes. A heat pump refrigeration cycle is formed by these connections. Outdoor units A1 to An and indoor units B1 to Bm are connected in parallel with each other.

The compressor 1 is a closed compressor in which a motor operated by the output of the inverter 10 is housed in a closed case. The compressor 1 sucks a refrigerant which passed through the accumulator 9. The compressor 1 compresses the sucked refrigerant and discharges it from the discharge hole. The inverter 10 converts the voltage of commercial AC power supply into DC voltage. The inverter 10 converts the DC voltage into AC voltage having a predetermined frequency F (Hz) and a level based on the predetermined frequency F, and outputs the AC voltage.

In a cooling operation, as shown by the arrows, a refrigerant discharged from the compressors 1 of outdoor units A1 to An flows into the indoor heat exchangers 32 of indoor units B1 to Bm via the four-way valves 2, the outdoor heat exchangers 3, the outdoor expansion valves 4, the liquid receivers 5 and packed valves 7 of outdoor units A1 to An and the indoor expansion valves 31. The refrigerant flowing from the indoor heat exchangers 32 is sucked by the compressors 1 after passing through packed valves 8, the four-way valves 2 and the accumulators 9 of outdoor units A1 to An. By this flow of refrigerant, each outdoor heat exchanger 3 functions as a condenser, and each indoor heat exchanger 32 functions as an evaporator.

In a heating operation, the refrigerant discharged from the compressors 1 of outdoor units A1 to An flows into the indoor heat exchangers 32 of indoor units B1 to Bm via the four-way valves 2 and packed valves 8 of outdoor units A1 to An by switching the flow channels of the four-way valves 2. The refrigerant flowing from the indoor heat exchangers 32 is sucked by the compressors 1 after passing through the indoor expansion valves 31 of indoor units B1 to Bm, and packed valves 7, the liquid receivers 5, the outdoor expansion valves 4, the outdoor heat exchangers 3, the four-way valves 2 and the accumulators 9 of outdoor units A1 to An. By this flow of refrigerant, each indoor heat exchanger 32 functions as a condenser, and each outdoor heat exchanger 3 functions as an evaporator.

In each of outdoor units A1 to An, the outdoor fan 11 is provided near the outdoor heat exchanger 3. In each of indoor units B1 to Bm, the indoor fan 33 is provided near the indoor heat exchanger 32.

In each of outdoor units A1 to An, pressure sensor 12 is attached to a high-pressure-side pipe between the discharge hole of the compressor 1 and the four-way valve 2. Further, pressure sensor 13 is attached to a low-pressure-side pipe between the accumulator 9 and the suction hole of the compressor 1. Pressure sensor 12 detects pressure Pd of the above high-pressure-side pipe. Pressure sensor 13 detects pressure Ps of the above low-pressure-side pipe.

In each of outdoor units A1 to An, temperature sensor 14 is attached to the high-pressure-side pipe. Temperature sensor 15 is attached to the low-pressure-side pipe. Further, temperature sensor 16 is attached a pipe provided between the outdoor heat exchanger 3 and the outdoor expansion valve 4 at a position closer to the outdoor heat exchanger 3. Temperature sensor 14 detects temperature Td of the refrigerant discharged from the compressor 1. Temperature sensor 15 detects temperature Ts of the refrigerant to be sucked by the compressor 1. Temperature sensor 16 detects temperature T1 of the refrigerant flowing through the pipe between the outdoor heat exchanger 3 and the outdoor expansion valve 4. Temperature sensor 17 is attached to, for example, a position such that it is not in contact with the outdoor heat exchanger 3 and receives air sent from the outdoor fan 11. Temperature sensor 17 detects the outside air temperature To.

In each of indoor units B1 to Bm, temperature sensor 34 is attached to a pipe provided between the indoor expansion valve 31 and the indoor heat exchanger 32. Temperature sensor 34 detects temperature T2 of the refrigerant flowing through the pipe between the indoor expansion valve 31 and the indoor heat exchanger 32.

The outdoor expansion valves 4 and the indoor expansion valves 31 are, for example, pulse motor valves (PMV) in which the degree of opening changes in accordance with the number of input drive pulses.

A controller 40 is connected to outdoor units A1 to An and indoor units B1 to Bm. A remote-control operation device (in other words, a remote controller) 41 and a reset switch 42 are connected to the controller 40. The controller 40 comprises, for example, a processor, a memory, a control circuit board and various circuits. For example, the remote controller 41 is used to set the operation conditions of the air conditioner. The reset switch 42 is provided in the control circuit board provided in the controller 40, etc.

The controller 40 mainly functions as the following portions (1) to (3). These functions are realized when the processor included in the controller 40 executes the computer program stored in the memory.

(1) The controller 40 functions as a detector which calculates (predicts) a predictive total degree of opening (a first total degree of opening) Qpre of the expansion valves at the present time point (a first time point) on the assumption that there is no refrigerant leakage in the refrigeration cycle, based on the change to the state quantity (a first state quantity) of the refrigeration cycle at the present time point from the state quantity (a second state quantity) of the refrigeration cycle in the early phase of operation (a second time point) earlier than the present time point. The detector detects refrigerant leakage of the refrigeration cycle by comparing the predictive total degree of opening Qpre with the actual total degree of opening (a second total degree of opening) Qact of the expansion valves at the present time point. When heating is applied, the detector detects refrigerant leakage on condition that the operating rate R of indoor units B1 to Bm is higher than a setting value Rs related to the operating rate.
(2) The controller 40 functions as a recorder which records, in the early phase of operation of the refrigeration cycle, the state quantity used by the detector to calculate the predictive total degree of opening Qpre.
(3) The controller 40 functions as an updater which updates setting value Rs in accordance with the operating rate of indoor units B1 to Bm when heating is applied.

When cooling is applied, the total degree of opening Qact is the total degree of opening of the indoor expansion valves 31. When heating is applied, the total degree of opening Qact is the total degree of opening of the outdoor expansion valves 4. Thus, when either cooling or heating is applied, the total degree of opening Qact is the total degree of opening of the expansion valves provided immediately before the evaporators (specifically, the indoor heat exchangers 32 in a cooling operation, and the outdoor heat exchangers 3 in a heating operation) in the direction of the refrigerant flow. The opening degree of each expansion valve is shown by, for example, the number of drive pulses of the expansion valve. In this case, the total degree of opening Qact is the sum of the numbers of drive pulses of the expansion valves provided immediately before the evaporators. The predictive total degree of opening Qpre is also shown by the number of drive pulses.

A method of calculating the predictive total degree of opening Qpre is explained.

In general, the degree of opening (the coefficient of discharge) Q of an expansion valve provided immediately before an evaporator can be obtained by the following theoretical formula of the flow characteristic. Here, $\rho$ is the density (kg/m$^3$) of the refrigerant on the refrigerant inlet side of the expansion valve. L is the circulating volume (kg/s) of the refrigerant passing through the expansion valve. $\Delta P$ is the difference (MPa) between the pressure of the refrigerant on the refrigerant inlet side of the explain valve and the pressure of the refrigerant on the refrigerant outlet side.

$$Q = L \times (1/\rho \times \Delta P)\ \hat{}\ 0.5$$

The circulating volume L and the pressure difference $\Delta P$ except the density $\rho$ of the refrigerant can be calculated by using the operating frequency of the compressor 1, the temperature of the refrigerant on the outlet side of the expansion valve provided immediately before the evaporator, the condensation temperature, the evaporation temperature and the degree of superheating. Assuming that there is no refrigerant leakage, and the density $\rho$ of the refrigerant is constant, the degree of opening Q at the present time point can be predicted by correcting the degree of opening Q at some time point based on the change from the operating frequency, the temperature of the refrigerant on the outlet side of the expansion valve provided immediately before the evaporator, the condensation temperature, the evaporation temperature and the degree of superheating at that point to these parameters at the present time point.

Specifically, the predictive total degree of opening Qpre (the total degree of opening of the indoor expansion valves 31) is given by

$$Qpre = a1 \cdot \Delta Fsum + b1 \cdot \Delta Tcj\ ave + c1 \cdot \Delta Tg\ ave +$$
$$d1 \cdot \Delta Tu\ ave + e1 \cdot \Delta SHave + Qsum, \qquad (1)$$

where a1, b1, c1, d1 and e1 are constants and may be determined experimentally, theoretically or empirically.

$\Delta Fsum$ is the change in the sum Fsum of the operating frequencies F of the compressors 1.

$\Delta Tcj\ ave$ is the change in mean value Tcj ave of the refrigerant temperature Tcj on the outlet side of the expansion valves provided immediately before the evaporators. When cooling is applied, the refrigerant temperature Tcj used to calculate mean value Tcj ave is temperature T2 detected by temperature sensors 34 of operating indoor units B. When heating is applied, the refrigerant temperature Tcj used to calculate mean value Tcj ave is temperature T1 detected by temperature sensors 16 of operating outdoor units A.

$\Delta Tg\ ave$ is the change in mean value Tg ave of the condensation temperature Tg converted from the discharge pressure of the compressors 1. Specifically, the condensation temperature Tg used to calculate mean value Tg ave is the temperature converted from detection pressure Pd of pressure sensors 12 of operating outdoor units A.

$\Delta Tu\ ave$ is the change in mean value Tu ave of the evaporation temperature Tu converted from the suction pressure of the compressors 1. Specifically, the evaporation temperature Tu used to calculate mean value Tu ave is the temperature converted from detection pressure Ps of pressure sensors 13 of operating outdoor units A.

$\Delta SHave$ is the change in mean value SHave of the degree of superheating SH on the suction side of operating compressors 1. Specifically, the degree of superheating SH used to calculate mean value SHave is a value obtained by subtracting the evaporation temperature Tu converted from detection pressure Ts of pressure sensors 13 of operating outdoor units A from detection temperature Ts of temperature sensors 15 of the operating outdoor units A (SH = Ts - Tu).

Qsum is the total degree of opening in the early phase of operation of the expansion valves provided immediately before the evaporators. When cooling is applied, the degree of opening used to calculate Qsum is the degree of opening of each indoor expansion valve 31. When heating is applied, the degree of opening used to calculate Qsum is the degree of opening of each outdoor expansion valve 4.

The above methods of calculating the parameters can be appropriately modified based on the positions of the temperature sensors or pressure sensors.

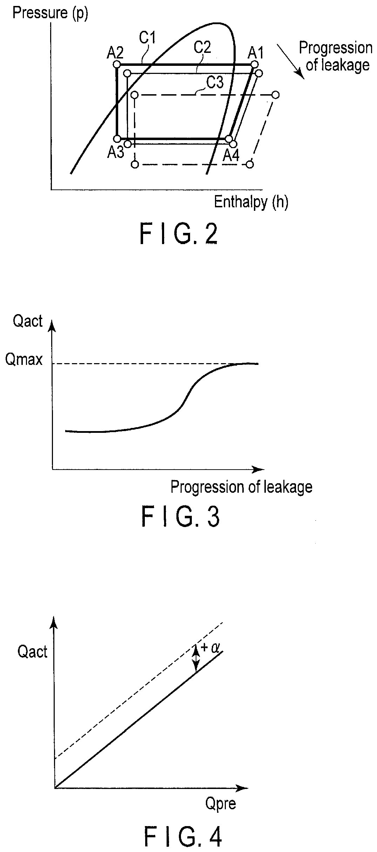

FIG. 2 is a p-h chart showing the behavior of the above refrigeration cycle in a cooling operation. FIG. 2 shows a cycle C1 in which there is no refrigerant leakage, a cycle C2 in which refrigerant leakage makes some progress, and a cycle C3 in which refrigerant leakage makes further progress from cycle C2. The refrigerant at A1 is in a high-pressure state where the refrigerant is compressed by the compressor 1. This refrigerant in the high-pressure state is condensed by the outdoor heat exchanger 3 and reaches A2. Further, the refrigerant is adiabatically-expanded by expansion valves 4 and 31 and reaches A3. After the adiabatic expansion, the refrigerant is evaporated by the indoor heat exchanger 32 and reaches A4. In connection with the progression of refrigerant leakage, the cycle moves in the direction of high enthalpy and low pressure as a whole. FIG. 3 shows how the total degree of opening Qact changes in the procession of leakage. The total degree of opening Qact shown in FIG. 3 is the total degree of opening of the indoor expansion valves 31 when the degree of superheating of the refrigeration cycle is kept constant. The total degree of opening Qact increases slowly at the beginning of leakage. When the leakage makes some progress, the total degree of opening Qact increases steeply. Subsequently, the total degree of opening Qact reaches the maximum total degree of opening Qmax. The maximum total degree of opening Qmax is the total degree of opening in a state where the indoor expansion valves 31 are open to the maximum extent.

Now, this specification explains an example of a method of detecting leakage using the predictive total degree of opening Qpre and the actual total degree of opening Qact. In the graph of FIG. 4, the horizontal axis represents the predictive total degree of opening Qpre, and the vertical axis represents the actual total degree of opening Qact. The solid line is the line of Qact = Qpre. The dashed line is the line of Qact = Qpre + $\alpha$. Setting value $\alpha$ is a threshold separating a case where refrigerant leakage can be detected in the refrigeration cycle from a case where refrigerant leakage cannot be detected. For example, the setting value may be determined experimentally, theoretically or empirically. For example, setting value $\alpha$ may be the degree of opening for 200 to 300 pulses as the number of drive pulses. For example, in the present embodiment, the above detector detects refrigerant leakage when difference $\Delta Q$ (= |Qpre - Qact|) between the predictive total degree of opening Qpre and the actual total degree of opening Qact is greater than setting value $\alpha$ ($\Delta Q > \alpha$).

Now, this specification explains the details of the operation of the controller 40 in connection with the detection of refrigerant leakage. Control related to the detection of refrigerant leakage differs between when cooling is applied and when heating is applied.

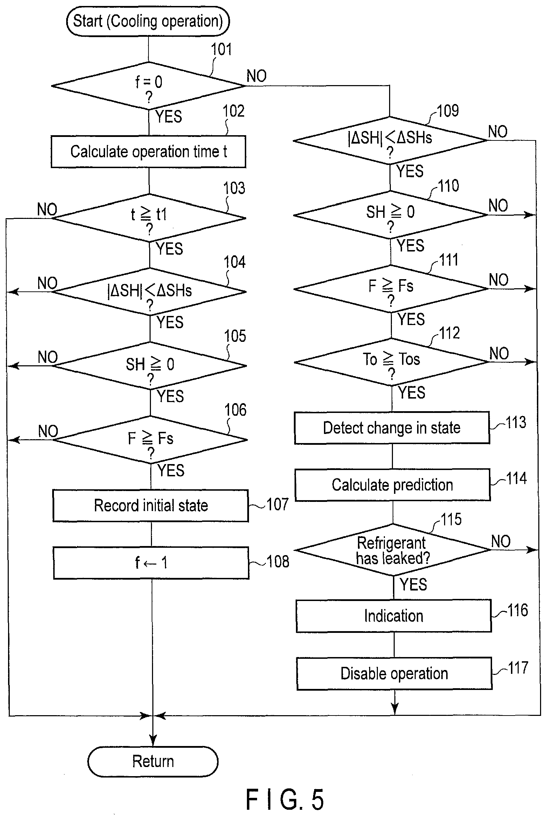

FIG. 5 is a flowchart showing an example of the operation of the controller 40 when cooling is applied. The controller 40 determines whether a flag f is "0" (step 101). For example, the flag f is cleared to "0" when the user or operator presses the reset switch 42 in installing the refrigeration cycle device.

When the flag f is "0" (YES in step 101), the controller 40 calculates the operation time t (step 102) and determines whether the calculated operation time t is greater than or equal to a setting time t1 (step 103). The calculated operation time t is updated and stored in the memory inside the controller 40 sequentially, and is cleared when the reset switch 42 is pressed. Setting time t1 is, for example, a time determined between 50 and 100 hours considered as the early phase of operation, and may be appropriately determined based on the environment in which the refrigeration cycle device is installed. When the calculated operation time t is less than setting time t1 (NO in step 103), the process of the controller 40 returns to the determination of step 101.

When the calculated operation time t is greater than or equal to setting time t1 (YES in step 103), the controller 40 determines whether the refrigeration cycle is stable (steps 104, 105 and 106). In step 104, the controller 40 determines whether the absolute value of difference $\Delta SH$ between the degree of superheating SH of the refrigerant on the suction side of each operating compressor 1 and the target value SHt of the degree of superheating SH is less than a setting value $\Delta SHs$ related to the degree of superheating ($|\Delta SH| < \Delta SHs$). The target value SHt is set by the controller 40 based on the operation conditions, etc. Setting value $\Delta SHs$ may be determined in advance in the range of, for example, 0 to 3 K. In step 105, the controller 40 determines whether the degree of superheating SH is positive ($SH \geq 0$). In step 106, the controller 40 determines whether the operating frequency F of each operating compressor 1 is greater than or equal to a setting value Fs related to the operating frequency ($F \geq Fs$). Setting value Fs may be determined in advance in the range of approximately 30% or more of the maximum operating frequency in each compressor 1, preferably, in the range of approximately 40% or more. When any one of the results of determination of steps 104 to 106 is negative, the operation of the controller 40 returns to the determination of step 101.

When all of the results of determination of steps 104 to 106 are affirmative, the controller 40 records the state quantity of the refrigeration cycle at this time point based on the determination that the refrigeration cycle enters a stable state (step 107). Specifically, the controller 40 detects Fsum, Tcj ave, Tg ave, Tu ave, SHave and Qsum at the present time point as the state quantity (second state quantity) of the early phase of operation (second time point), and stores the detected state quantity in the internal memory. In the explanation below, Fsum, Tcj ave, Tg ave, Tu ave and SHave detected and stored in step 107 are referred to as Fsum', Tcj ave', Tg ave', Tu ave' and SHave', respectively. The controller 40 sets the flag f to "1" after recording the state quantity of the early phase of operation (step 108). Subsequently, the operation of the controller 40 returns to the determination of step 101.

When the flag f is "1" (NO in step 101), the controller 40 determines whether the refrigeration cycle is stable (steps 109, 110 and 111) in a manner similar to that of steps 104 to 106. Further, the controller 40 determines whether the outside air temperature To is greater than or equal to a setting value Tos related to the outside air temperature ($To \geq Tos$) (step 112). Setting value Tos may be set in advance in the range of, for example, 10 to 15°C. The outside air temperature To used for comparison with setting value Tos may be, for example, the temperature detected by one of temperature sensors 17 of operating outdoor units A, or may be the mean value of the temperature detected by temperature sensors 17 of operating outdoor units A. When any one of the results of determination of steps 109 to 112 is negative, the operation of the controller 40 returns to the determination of step 101.

When all of the results of determination of steps 109 to 112 are affirmative, the controller 40 detects, as the change in the state, the difference between the state quantity of the early phase of operation stored in the internal memory and the state quantity of the refrigeration cycle at the present time point (step 113). Specifically, the controller 40 detects Fsum, Tcj ave, Tg ave, Tu ave, SHave and Qact at the present time point as the state quantity (first state quantity) at the present time point (first time point). Qact is the actual total degree of opening of the indoor expansion valves 31 at the present time point. The change in the state is AFsum (= Fsum - Fsum'), $\Delta Tcj$ ave (= Tcj ave - Tcj ave'), $\Delta Tg$ ave (= Tg ave - Tg ave'), $\Delta Tu$ ave (= Tu ave - Tu ave'), and $\Delta SHave$ (= SHave - SHave').

The controller 40 calculates the predictive total degree of opening Qpre of the indoor expansion valves 31 on the assumption that there is no refrigerant leakage in the refrigeration cycle, based on the detected change in the state, specifically, $\Delta Fsum$, $\Delta Tcj$ ave, $\Delta Tg$ ave, $\Delta Tu$ ave and $\Delta SHave$, the total degree of opening Qsum of the early phase of operation stored in the internal memory, and equation (1) (step 114).

The controller 40 determines the presence or absence of refrigerant leakage based on the calculated predictive total degree of opening Qpre and the actual degree of opening Qact of the indoor expansion valves 31 at the present time point (step 115). Specifically, the controller 40 calculates difference $\Delta Q$ (= |Qpre - Qact|) between the predictive total degree of opening Qpre and the actual total degree of opening Qact, and determines whether difference $\Delta Q$ is greater than the above setting value $\alpha$ ($\Delta Q > \alpha$).

When difference $\Delta Q$ is greater than setting value $\alpha$ (YES in step 115), the controller 40 indicates this fact by, for example, a character display or an icon image display with the remote controller 41 based on the determination that there is refrigerant leakage in the refrigeration cycle (step 116). By this indication, the user is able to recognize that refrigerant leakage has occurred and request maintenance or inspection.

Further, the controller 40 suspends the compressors 1 and disables the subsequent operation based on the indication (step 117). This disablement prevents the operation from continuing during the leakage of the refrigerant. Thus, a detrimental effect on the refrigeration cycle device can be avoided.

When difference $\Delta Q$ is less than or equal to setting value $\alpha$ (NO in step 115), the amount of refrigerant of the refrigeration cycle is normal. In this case, the operation of the controller 40 returns to the determination of step 101 without going through steps 116 and 117.

Now, this specification explains an operation which is performed when heating is applied.

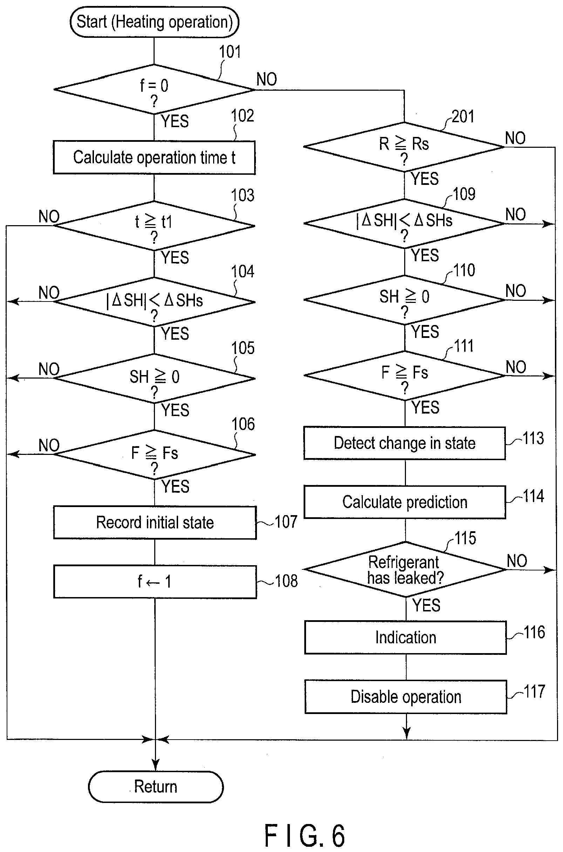

FIG. 6 is a flowchart showing an example of the operation of the controller 40 when heating is applied. The controller 40 determines whether the flag f is "0" (step 101). When the flag f is "0" (YES in step 101), the controller 40 performs steps 102 to 108 in a manner similar to that of a cooling operation. The state quantity (second state quantity) of the early phase of operation (second time point) detected and stored in the internal memory in step 107 is Fsum', Tcj ave', Tg ave', Tu ave', SHave' and Qsum in a manner similar to that of a cooling operation. Here, Tcj ave' is the mean value of temperature T1 detected by temperature sensors 16 of operating outdoor units A. Qsum is the total degree of opening of the outdoor expansion valves 4.

When the flag f is "1" (NO in step 101), the controller 40 determines whether the operating rate R of each of indoor units B1 to Bm is greater than or equal to setting value Rs (step 201). The operating rate R is the proportion of total horsepower Gact of indoor units B operating at the present time point to total horsepower Gt of indoor units B1 to Bm ($R = Gact/Gt$). To explain the operating rate R, as an example, this specification assumes a refrigeration cycle device comprising indoor unit B1 having 4 HP (horsepower) and indoor units B2 to B5 having 2 HP. In this case, total horsepower Gt is 12 (= 4 + 2 + 2 + 2 + 2) HP. For example, when all of indoor units B1 to B5 operate, the operating rate R is 100% (= 12 HP / 12 HP). When only outdoor unit B5 operates, the operating rate R is 16.7% (= 2 HP / 12 HP).

When the operating rate R is less than setting value Rs (NO in step 201), the operation of the controller 40 returns to the determination of step 101. In this case, detection of refrigerant leakage is not performed.

When the operating rate R is greater than or equal to setting value Rs (YES in step 201), the controller 40 determines whether the refrigeration cycle is stable in a manner similar to that of a cooling operation (steps 109, 110 and 111). In a heating operation, the determination regarding the outside air temperature To (step 112) is not performed.

When all of the results of determination of steps 109 to 111 are affirmative, the controller 40 performs the same steps as steps 113 to 117 of a cooling operation. The state quantity (first state quantity) at the present time point (first time point) detected in step 113 is Fsum, Tcj ave, Tg ave, Tu ave, SHave and Qact in a manner similar to that of a cooling operation. Further, the change in the state is AFsum (= Fsum - Fsum'), $\Delta$Tcj ave (= Tcj ave - Tcj ave'), $\Delta$Tg ave (= Tg ave - Tg ave'), $\Delta$Tu ave (= Tu ave - Tu ave') and $\Delta$SHave (= SHave - SHave') in a manner similar to that of a cooling operation. Here, Tcj ave is the mean value of temperature T1 detected by temperature sensors 16 of operating outdoor units A. Qact is the total degree of opening of the outdoor expansion valves 4. The predictive total degree of opening Qpre calculated in step 114 is the total degree of opening related to the outdoor expansion valves 4. In step 115, the presence or absence of refrigerant leakage is determined by comparing difference $\Delta Q$ between the predictive total degree of opening Qpre calculated in step 114 and the actual total degree of opening Qact of the outdoor expansion valves 4 at the present time point with setting value $\alpha$. Setting value $\alpha$ may be different from that of a cooling operation.

Step 201 is inserted into a heating operation to prevent erroneous detection of refrigerant leakage because of a liquid refrigerant stored in suspended indoor units B. When heating is applied, each indoor heat exchanger 32 functions as a condenser, and the indoor expansion valves 31 of suspended indoor units B are closed. Thus, a liquid refrigerant is stored in the indoor heat exchangers 32 of suspended indoor units B, etc. When a few indoor units B are under suspension (in other words, when the operating rate R is high), a sufficient amount of refrigerant is supplied to the refrigeration cycle from the liquid receivers 5 of outdoor units A1 to An. However, when a large number of indoor units B are under suspension (in other words, when the operating rate R is low), the amount of refrigerant circulating in the refrigeration cycle is insufficient. Thus, the liquid tube may have two phases, or the degree of opening of each outdoor expansion valve 4 may be increased. Thus, even if no refrigerant leakage has occurred, refrigerant leakage may be detected because of the increase in the total degree of opening Qact which is used to determine refrigerant leakage.

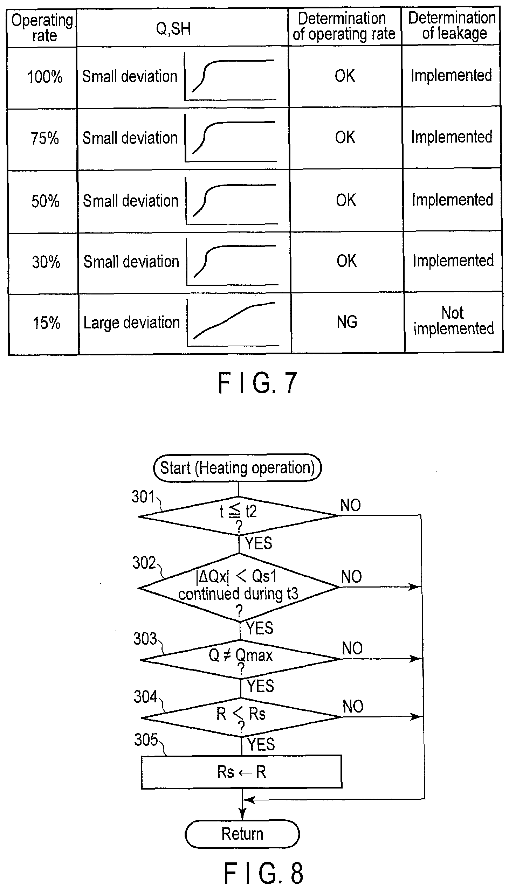

FIG. 7 is a conceptual diagram showing an example of the relationship between the operating rate R and the possibility of implementation of leakage determination. In this example, when the operating rate R is 100%, 75%, 50% and 30%, the degree of opening Q of each outdoor expansion valve 4 and the degree of superheating SH of the refrigerant on the suction side of each compressor 1 are stable after staring a heating operation. The deviations of the degree of opening Q and the degree of superheating SH are small. In this case, the refrigerant circulating in the refrigeration cycle does not cause erroneous detection of refrigerant leakage in terms of the amount (thus, the determination of operating rate is "OK"). Therefore, the determination of leakage is implemented. In contrast, when the operating rate R is 15%, the degree of opening Q or the degree of superheating SH is unstable even after a certain amount of time. The deviations of the degree of opening Q and the degree of superheating SH are large. In this case, the refrigerant circulating in the refrigeration cycle may cause erroneous detection of refrigerant leakage in terms of the amount (thus, the determination of operating rate is "NG"). Therefore, the determination of leakage is not implemented.

In the example of FIG. 7, for example, setting value Rs may be set to approximately 30% as it is the lowest operating rate which does not produce the behavior caused by a shortage of refrigerant. Setting value Rs may be fixed in advance, or may be appropriately changed after installing the refrigeration cycle device.

FIG. 8 is a flowchart showing an example of the operation of the controller 40 when setting value Rs is appropriately changed. For example, the operation shown in this flowchart is performed when the flag f is "0" in a heating operation. The controller 40 determines whether the calculated operation time t is greater than or equal to a setting value t2 (step 301). Setting time t2 is, for example, a time determined between 50 and 100 hours considered as the early phase of operation, and may be appropriately determined based on the environment in which the refrigeration cycle device is installed. During a period in which the calculated operation time t is less than setting time t2 (NO in step 301), the controller 40 repeats the determination of step 301.

When the calculated operation time t is greater than or equal to setting time t2 (YES in step 301), the controller 40 determines whether the degree of opening Q of each outdoor expansion valve 4 is stable (step 302). Specifically, the controller 40 determines whether the absolute value of the change $\Delta Qx$ in the degree of opening Q of each outdoor expansion valve 4 for each predetermined time is constantly less than a setting value Qs1 ($|\Delta Qx| < Qs1$) during a certain time t3. The predetermined time is the cycle for sampling the number of drive pulses of each outdoor expansion valve 4 to calculate the change $\Delta Qx$, and is, for example, the cycle for performing step 302. Setting value Qs1 is a value used to determine that the degree of opening Q of each outdoor expansion valve 4 is stable. Setting value Qs1 is, for example, the degree of opening for 5 to 10 pulses as the number of drive pulses. For example, certain time t3 may be determined in the range of 3 to 5 minutes. When the result of determination of step 302 is negative (NO in step 302), the operation of the controller 40 returns to step 301.

When the result of determination of step 302 is affirmative (YES in step 302), the controller 40 determines whether the current degree of opening Q of each outdoor expansion valve 4 is not the maximum degree of opening Qmax of the outdoor expansion valves 4 (step 303). When the degree of opening Q of at least one outdoor expansion valve 4 reaches the maximum degree of opening Qmax (NO in step 303), there is a possibility that the degree of opening Q of the outdoor expansion valve 4 is stable at the maximum degree of opening Qmax even though the amount of refrigerant of the refrigeration cycle is insufficient. In this case, the operation of the controller 40 returns to step 301.

When the degree of opening Q of all of the outdoor expansion valves 4 is less than the maximum degree of opening Qmax (YES in step 303), it may be determined that the behavior caused by a shortage of refrigerant circulating in the refrigeration cycle is not produced. The controller 40 determines whether the current operating rate R is less than setting value Rs (R < Rs) (step 304). When the operating rate R is greater than or equal to setting value Rs (NO in step 304), the operation of the controller 40 returns to the determination of step 301. When the operating rate R is less than setting value Rs (YES in step 304), the controller 40 updates setting value Rs with the current operating rate R (step 305).

For example, setting value Rs is set so as to be sufficiently large soon after the refrigeration cycle device is installed. Subsequently, the steps shown in the flowchart of FIG. 8 are repeated in a normal operation. In connection with this repetition, setting value Rs is updated with a smaller value in a range which does not produce the behavior caused by a shortage of refrigerant.

As explained above, the refrigeration cycle device of the present embodiment predicts the total degree of opening Qpre of the expansion valves on the assumption that there is no refrigerant leakage, based on the change from the state quantity of the early phase of operation of the refrigeration cycle to the current state quantity. The refrigeration cycle device further detects refrigerant leakage by comparing the predictive total degree of opening Qpre with the actual total degree of opening Qact at the present time point. In this manner, when the change from the state quantity of the early phase of operation to the current state quantity is used, it is possible to accurately predict the total degree of opening Qpre without relying on the number of indoor units B and the length of pipes in the refrigeration cycle. Thus, even if the leakage of refrigerant is less, the leakage can be surely detected.

Further, the present embodiment uses the total degree of opening of the expansion valves provided immediately before the evaporators as a parameter for determining leakage when either cooling or heating is applied. Normally, in a refrigeration cycle, the degree of opening of an expansion valve provided immediately after a condenser is controlled such that the amount of supercooling of the condenser is constant. Thus, the density of the refrigerant on the inlet side of this expansion valve does not change without leakage of a substantial amount of refrigerant. However, the degree of opening of an expansion valve provided immediately before an evaporator is controlled such that the degree of superheating of the evaporator is constant. Thus, the sensitivity to the change in the density of the refrigerant in the liquid pipe is high. In this manner, in the present embodiment, it is possible to detect refrigerant leakage even if the leakage of refrigerant is less.

Moreover, in the present embodiment, on condition that the refrigeration cycle is stable, the initial state is stored, and refrigerant leakage is detected. Thus, refrigerant leakage can be accurately detected. Especially, the following two conditions are used to determine whether the refrigeration cycle is stable. As the first condition, the absolute value of difference $\Delta SH$ between the degree of superheating SH and the target value SHt is less than setting value $\Delta SHs$. As

the second condition, the degree of superheating SH is positive. Thus, refrigerant leakage can be accurately detected in a state where there is no liquid-back, in which a liquid refrigerant is sucked by the compressors 1, or there is no delay in the operation of the expansion valves. When the operating frequency F is low, the liquid refrigerant may be stored in the outdoor heat exchangers 3 or the indoor heat exchangers 32. In this regard, a condition that the operating frequency F is greater than or equal to setting value Fs is used to determine the stable state of the refrigeration cycle. Therefore, refrigerant leakage can be accurately detected in a state where the liquid refrigerant is not stored in the outdoor heat exchangers 3 or the indoor heat exchangers 32.

When the outside air temperature To is low in a cooling operation, the liquid refrigerant may be stored in the outdoor heat exchangers 3. In this regard, a condition that the outside air temperature To is greater than or equal to setting value Tos is used to perform leakage detection. Therefore, refrigerant leakage can be accurately detected in a state where the liquid refrigerant is not stored in the outdoor heat exchangers 3.

In the present embodiment, leakage detection is not performed when the operating rate R is less than setting value Rs in a heating operation. Thus, it is possible to prevent erroneous detection of leakage caused by the behavior of the refrigeration cycle with a low operating rate. When there is an indoor unit B under suspension, the refrigerant is stored in the indoor unit B. This structure decreases the redundant refrigerant stored in the liquid receivers 5, etc. Thus, when the operating rate R is low in the range greater than or equal to setting value Rs, leakage can be detected even with a smaller amount of leaked refrigerant.

[2] Second Embodiment

A second embodiment is explained. The structure of a refrigeration cycle device is the same as that of the first embodiment. The same or similar elements are denoted by the same reference numbers. Thus, the explanation of such elements may be omitted.

A controller 40 mainly functions as a detector, a recorder and an updater in a manner similar to that of the first embodiment. However, the detector of the present embodiment calculates (predicts) a predictive total amount of supercooling (a first amount of supercooling) UCpre of each condenser at the present time point (a first time point) on the assumption that there is no refrigerant leakage in the refrigeration cycle, based on the change to the state quantity (a first state quantity) of the refrigeration cycle at the present time point from the state quantity (a second state quantity) of the refrigeration cycle in the early phase of operation (at a second time point). The detector detects refrigerant leakage of the refrigeration cycle by comparing the actual total amount of supercooling (a second amount of supercooling) UCact of each condenser at the present time point with the predictive total amount of supercooling UCpre.

The amount of supercooling UC of an outdoor heat exchanger 3 which functions as a condenser in a cooling operation is, for example, the difference (Tg - T1) between the saturated condensation temperature Tg converted from the detection pressure Pd of a pressure sensor 12 of an outdoor unit A and detection temperature T1 of an temperature sensor 16. In this case, the total amount of supercooling UCact is equivalent to the total amount of supercooling UC of the outdoor heat exchangers 3 of operating indoor units A out of outdoor units A1 to An.

The amount of supercooling UC of an indoor heat exchanger 32 which functions as a condenser in a heating operation is, for example, the difference (Tg ave - T2) between the mean value Tg ave of the saturated condensation temperature Tg converted from the detection pressure Pd of the pressure sensors 12 of operating outdoor units A and detection temperature T2 of a temperature sensor 34 of an indoor unit B. In this case, the total amount of supercooling UCact is equivalent to the total amount of supercooling UC of the indoor heat exchangers 32 of operating indoor units B out of indoor units B1 to Bm.

A method of calculating the predictive total amount of supercooling UCpre is explained.

In general, the amount of supercooling UC is determined based on the amount of refrigerant of the refrigeration cycle, the inner volume of the refrigeration cycle and the amount of heat transmission. The amount of heat transmission can be shown by the following theoretical formula. The lefthand side represents the amount of heat transmission on the air side. The right-hand side represents the amount of heat transmission on the refrigerant side. K is the rate of heat passage (kW/m$^2$K). A is the area of heat transmission (m$^2$). $\Delta$T is the temperature difference (K) between the refrigerant and air. Gr is the flow rate (kg/h) of refrigerant. $\Delta$h is the difference in the specific enthalpy (kJ/kg).

$$\text{Amount of heat transmission} = K \times A \times \Delta T = Gr \times \Delta h$$

Assuming that the amount of refrigerant of the refrigeration cycle is constant because there is no refrigerant leakage, and the inner volume of the refrigeration cycle is constant, the current amount of supercooling UC can be predicted by correcting the amount of supercooling UC at a certain time point based on the change from parameters related to the amount of heat transmission at the certain time point to the same parameters at the present time point.

For example, the parameters related to the amount of heat transmission may be the operating frequency of a compressor 1, the condensation temperature, the evaporation temperature, the degree of superheating and the outside air temperature.

Specifically, the predictive total amount of supercooling UCpre is given by

$$UCpre = a2 \cdot \Delta Fsum + b2 \cdot \Delta Tg\ ave + c2 \cdot \Delta Tu\ ave + d2 \cdot \Delta SHave + e2 \cdot \Delta To\ ave + UCsum, \qquad (2)$$

where a2, b2, c2, d2 and e2 are constants and may be determined experimentally, theoretically or empirically, and ΔFsum, ΔTg ave, ΔTu ave and ΔSHave are the same parameters as in equation (1).

ΔTo ave is the change in mean value To ave of detection temperature To of temperature sensors 17 of operating outdoor units A. UCsum is the total amount of supercooling of the condensers in the early phase of operation. In a cooling operation, the amount of supercooling UC used to calculate UCsum is the difference between the saturated condensation temperature Tg converted from the detection pressure Pd of the pressure sensor 12 of each operating outdoor unit A and detection temperature T1 of temperature sensor 16 of each operating outdoor unit A. In a heating operation, the amount of supercooling UC used to calculate UCsum is, for example, the difference between the above mean value Tg ave and detection temperature T2 of temperature sensor 34 of each indoor unit B.

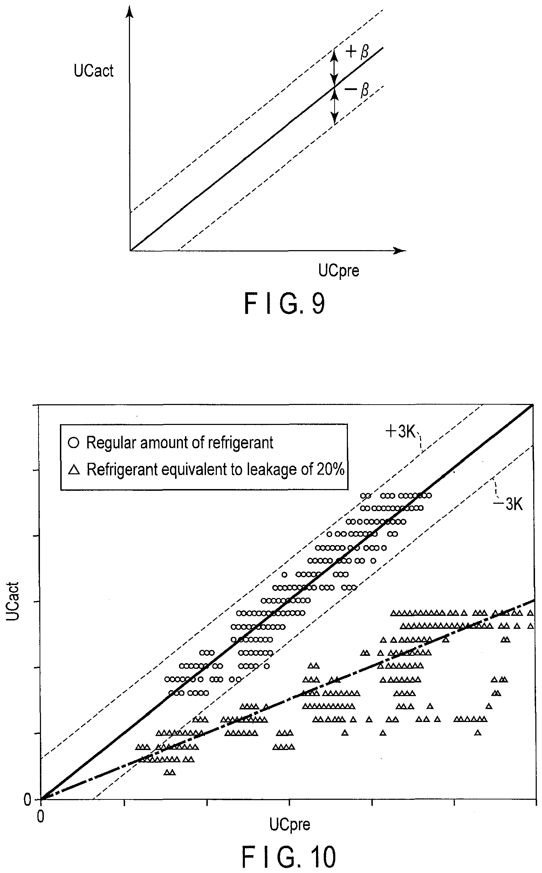

Now, this specification explains an example of a method of detecting leakage using the predictive total amount of supercooling UCpre and the actual total amount of supercooling UCact. In the graph of FIG. 9, the horizontal axis represents the predictive total amount of supercooling UCpre, and the vertical axis represents the actual total amount of supercooling UCact. The solid line is the line of UCact = UCpre. The dashed lines are the lines of UCact = UCpre + β, and UCact = UCpre - β. Setting value β is a threshold separating a case where refrigerant leakage can be detected in the refrigeration cycle from a case where refrigerant leakage cannot be detected. For example, the setting value may be determined experimentally, theoretically or empirically. For example, setting value β may be determined in the range of 3 to 5 K. In the present embodiment, the above means for detection detects refrigerant leakage when the difference ΔUC (= |UCpre - UCact|) between the predictive total amount of supercooling UCpre and the actual total amount of supercooling UCact is greater than setting value β (ΔUC > β). In the coordinate system of FIG. 9, refrigerant leakage is detected when the dot determined by the total amounts of supercooling UCpre and UCact is not present between the two dashed lines.

As an example, FIG. 10 shows the results of the calculation of the predictive total amount of supercooling UCpre and the measurement of the actual total amount of supercooling UCact in a case where a regular amount of refrigerant is filled in the refrigeration cycle, and in a case where the amount of the refrigerant filled in the refrigeration cycle is equivalent to leakage of 20%. The horizontal axis represents the predictive total amount of supercooling UCpre. The vertical axis represents the actual total amount of supercooling UCact. The dashed lines are the lines of UCact = UCpre + β and UCact = UCpre - β. The solid line is the approximate line of a plot related to the regular amount of refrigerant and substantially conforms to the line of UCact = UCpre. The alternate long and short dash line is the approximate line of a plot related to the amount of refrigerant equivalent to leakage of 20%.

In the example of FIG. 10, setting value β is 3 K. The plot related to the regular amount of refrigerant and its approximate line are substantially in the range of ΔUC ≤ β. The plot related to the amount of refrigerant equivalent to leakage of 20% and its approximate line are mostly in the range of ΔUC > β. The above results reveal that refrigerant leakage can be detected by comparing the predictive total amount of supercooling UCpre with the actual total amount of supercooling UCact.

Now, this specification explains the details of the operation of the controller 40 in connection with the detection of refrigerant leakage.

In a cooling operation, the controller 40 operates in line with the flowchart of FIG. 5 in a manner similar to that of the first embodiment. However, the state quantity (second state quantity) of the early phase of operation (second time point) detected and stored in the internal memory in step 107 is Fsum, Tg ave, Tu ave, SHave, To ave and UCsum at this time point. UCsum is the total amount of supercooling UC related to the outdoor heat exchangers 3 of operating outdoor units A at the time of step 107. In the explanation below, Fsum, Tg ave, Tu ave, SHave and To ave detected and stored in step 107 are referred to as Fsum', Tg ave', Tu ave', SHave' and To ave', respectively.

The state quantity (first state quantity) detected in step 113 is Fsum, Tg ave, Tu ave, SHave, To ave and UCact at the time point (first time point). UCact is the total amount of supercooling UC related to the outdoor heat exchangers 3 of operating outdoor units A at the time of step 113. The change in the state detected in step 113 is ΔFsum (= Fsum - Fsum'), ΔTg ave (= Tg ave - Tg ave'), ΔTu ave (= Tu ave - Tu ave'), ΔSHave (= SHave - SHave'), and ΔTo ave (= To ave - To ave').

In step 114, the predictive total amount of supercooling UCpre is calculated based on the detected change in the state, specifically, ΔFsum, ΔTg ave, ΔTu ave, ΔSHave and ΔTo ave, the total amount of supercooling UCsum in the early phase of operation stored in the internal memory, and equation (2). In step 115, the presence or absence of refrigerant leakage is determined by comparing the difference ΔUC between the predictive total amount of supercooling UCpre calculated in step 114 and the current total amount of supercooling UCact of the outdoor heat exchangers 3 with setting value β.

In a heating operation, the controller 40 operates in line with the flowchart of FIG. 6 in a manner similar to that of the first embodiment. The state quantity (second state quantity) of the early phase of operation (second time point) detected and stored in the internal memory in step 107 is Fsum', Tg ave', Tu ave', SHave', To ave' and UCsum in a manner similar to that of a cooling operation. However, UCsum is the total amount of supercooling UC related to the indoor heat exchangers 32.

The state quantity (first state quantity) at the present time point (first time point) detected in step 113 is Fsum, Tg ave, Tu ave, SHave, To ave and UCact in a manner similar to that of a cooling operation. The change in the state is ΔFsum (= Fsum - Fsum'), ΔTg ave (= Tg ave - Tg ave'), ΔTu ave (= Tu ave - Tu ave'), ΔSHave (= SHave - SHave') and ΔTo ave (= To ave - To ave'). However, UCact is the total amount of supercooling UC related to the indoor heat exchangers 32 of operating indoor units B at the time of step 113. The predictive total amount of supercooling UCpre calculated in step 114 is the predictive total amount of supercooling related to the indoor heat exchangers 32. In step 115, the presence or absence of refrigerant leakage is determined by comparing the difference ΔUC between the predictive total amount of supercooling UCpre calculated in step 114 and the current total amount of supercooling UCact of the indoor heat exchangers 32 with setting value β. Setting value β may be different from that of a cooling operation.

The flow of the operation for updating a setting value Rs is the same as that of the flowchart of FIG. 8.

As explained above, in the present embodiment, refrigerant leakage can be accurately detected in a manner similar to that of the first embodiment even if refrigerant leakage is detected by comparing the predictive total amount of supercooling UCpre with the actual total amount of supercooling UCact.

[3] Modification Examples

Some modification examples are explained.

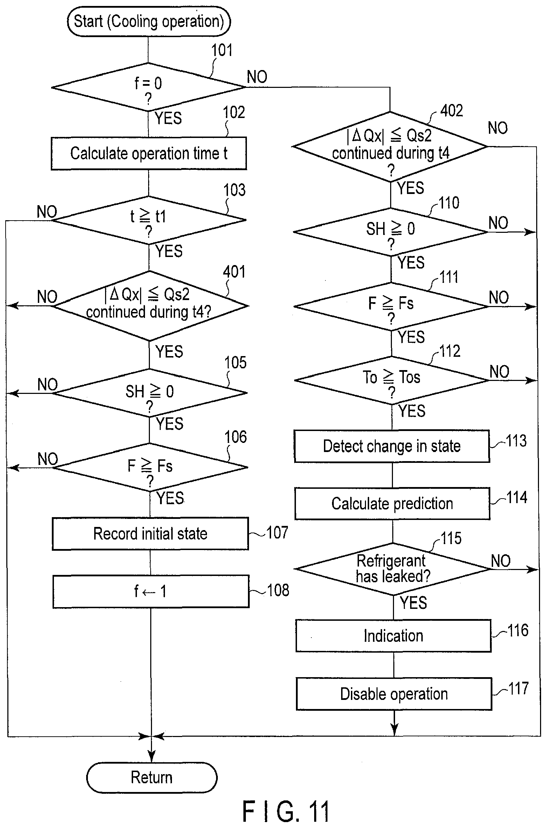

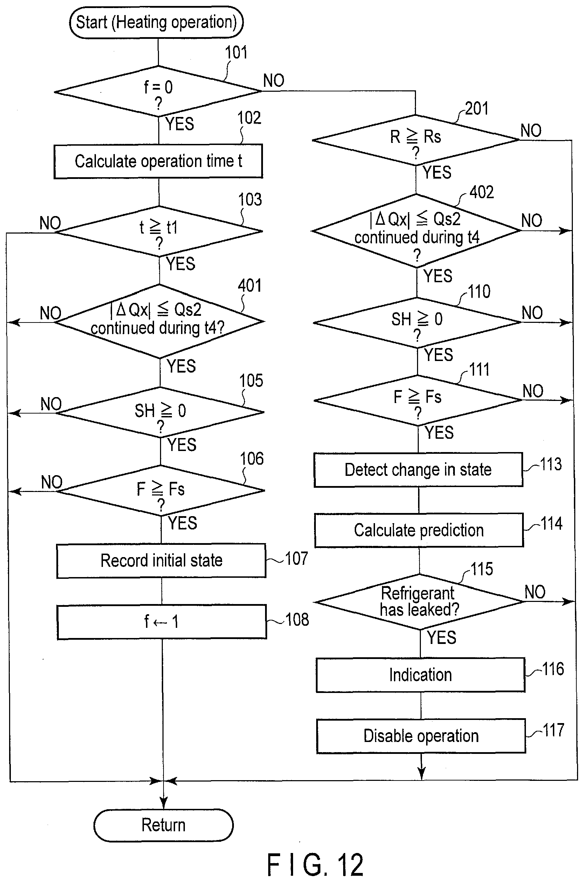

Regarding the determination of the stable state of the refrigeration cycle, steps 401 and 402 shown in FIG. 11 and FIG. 12 may be used in place of steps 104 and 109. In steps 401 and 402 of the flowchart (cooling operation) of FIG. 11, the controller 40 determines whether the absolute value of the change ΔQx in the degree of opening Q of each indoor expansion valve 31 for each predetermined time is constantly less than a setting value Qs2 (|ΔQx| < Qs2) during a certain time t4. In steps 401 and 402 of the flowchart (heating operation) of FIG. 12, the controller 40 determines whether the absolute value of the change ΔQx in the degree of opening Q of each outdoor expansion valve 4 for each predetermined time is constantly less than setting value Qs2 (|ΔQx| < Qs2) during certain time t4. The predetermined time is the cycle for sampling the number of drive pulses of each indoor expansion valve 31 or each outdoor expansion valve 4 to calculate the change ΔQx, and may be, for example, the cycle for performing steps 401 and 402. Setting value Qs2 is a value used to determine that the degree of opening Q of each outdoor expansion valve 4 or each indoor expansion valve 31 is stable. Setting value Qs2 may be, for example, the degree of opening for 3 to 5 pulses as the number of drive pulses. For example, certain time t4 may be determined in the range of 5 to 10 minutes.

In general, in a multi-type air conditioner, the design of an indoor unit or the length of pipes is very flexible. Therefore, the structure of the system may be changed after installing the air conditioner. When a parameter which heavily relies on an indoor unit or the length of pipes is included in the formulae for calculating the predictive total degree of opening Qpre and the predictive total amount of supercooling UCpre, the formulae need to be defined again in connection with the change in the structure of the system. To solve this problem, the predictive total degree of opening Qpre and the predictive total amount of supercooling UCpre may be calculated by formulae defined so as not to include a parameter which heavily relies on an indoor unit or the length of pipes. For example, the evaporation temperature Tu and the degree of superheating SH on the suction side of each compressor 1 heavily rely on the indoor unit or the length of pipes. Thus, formulae may be defined so as not to include them.

In step 305 of the flowchart of FIG. 8, setting value Rs may be updated with an operating rate which is higher than the current operating rate R by only a predetermined value. The amount of liquid refrigerant stored in suspended indoor units and pipes around the indoor units changes based on the indoor arrangement such as the length of pipes connecting the indoor units to the respective outdoor units. Thus, when the operating rate R is the same, but the suspended indoor units differ, the behavior caused by a shortage of refrigerant may be produced in one of them, and may not be produced in the other. It is possible to prevent erroneous detection of refrigerant leakage caused by the difference in indoor arrangement by updating setting value Rs in the above manner.

The process for updating setting value Rs in the flowchart of FIG. 8 may be performed while the operating rate is changed forcibly in a test operation when the refrigeration cycle device is installed, instead of in a normal operation.

Refrigeration cycle devices mounted on air conditioners are explained in the above embodiments and modification examples. However, the structures related to the detection of refrigerant leakage disclosed in the above embodiments and modification examples may be also applied to refrigeration cycle devices mounted on other devices such as hot-water supply devices.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A refrigeration cycle device comprising:

   a refrigeration cycle which returns a refrigerant discharged from a compressor to the compressor via a condenser, a plurality of expansion valves and a plurality of evaporators connected to the expansion valves, respectively; and
   a detector which predicts a first total degree of opening of the expansion valves at a first time point on the assumption that there is no refrigerant leakage in the refrigeration cycle, based on a change to a first state quantity of the refrigeration cycle at the first time point from a second state quantity of the refrigeration cycle at a second time point earlier than the first time point, the detector detecting refrigerant leakage of the refrigeration cycle by comparing the first total degree of opening with a second total degree of opening which is an actual total degree of opening of the expansion valves at the first time point.

2. The refrigeration cycle device of Claim 1, further comprising a plurality of indoor units each comprising an indoor heat exchanger functioning as the condenser in a heating operation, wherein
   in the heating operation, the detector performs the detection of refrigerant leakage in a state where an operating rate of the indoor units is higher than a setting value related to the operating rate.

3. The refrigeration cycle device of Claim 2, further comprising an updater which updates the setting value in accordance with the operating rate of the indoor units in a state where the degree of opening of each of the expansion valves is less than a maximum degree of opening and constantly stable for a certain time in the heating operation.

4. The refrigeration cycle device of Claim 1, wherein
   the detector performs the detection of refrigerant leakage in a state where a frequency of the compressor is greater than or equal to a setting value related to the frequency.

5. The refrigeration cycle device of Claim 1, wherein
   in a cooling operation, the detector performs the detection of refrigerant leakage in a state where an outside air temperature is greater than or equal to a setting value related to the outside air temperature.

6. A refrigeration cycle device comprising:

   a refrigeration cycle which returns a refrigerant discharged from a compressor to the compressor via a condenser, an expansion valve and an evaporator; and
   a detector which predicts a first amount of supercooling of the condenser at a first time point on the assumption that there is no refrigerant leakage in the refrigeration cycle, based on a change to a first state quantity of the refrigeration cycle at the first time point from a second state quantity of the refrigeration cycle at a second time point earlier than the first time point, the detector detecting refrigerant leakage of the refrigeration cycle by comparing the first amount of supercooling with a second amount of supercooling which is an actual amount of supercooling of the condenser at the first time point.

7. The refrigeration cycle device of Claim 6, further comprising a plurality of indoor units each comprising an indoor heat exchanger functioning as the condenser in a heating operation, wherein
   in the heating operation, the detector performs the detection of refrigerant leakage in a state where an operating rate of the indoor units is higher than a setting value related to the operating rate.

8. The refrigeration cycle device of Claim 7, further comprising an updater which updates the setting value in accordance with the operating rate of the indoor units in a state where a degree of opening of the expansion valve is less than a maximum degree of opening and constantly stable for a certain time in the heating operation.

9. The refrigeration cycle device of Claim 6, wherein
the detector performs the detection of refrigerant leakage in a state where a frequency of the compressor is greater than or equal to a setting value related to the frequency.

10. The refrigeration cycle device of Claim 6, wherein
in a cooling operation, the detector performs the detection of refrigerant leakage in a state where an outside air temperature is greater than or equal to a setting value related to the outside air temperature.

F I G. 1

Pressure (p)

C1　C2

A2　　　　　　　A1

Progression
of leakage

C3

A3　　　　　A4

Enthalpy (h)

F I G. 2

Qact

Qmax

Progression of leakage

F I G. 3

Qact

+ α

Qpre

F I G. 4

**Start (Cooling operation)**

101 — f = 0 ? — NO
YES

102 — Calculate operation time t

103 — t ≧ t1 ? — NO
YES

104 — |ΔSH| < ΔSHs ? — NO
YES

105 — SH ≧ 0 ? — NO
YES

106 — F ≧ Fs ? — NO
YES

107 — Record initial state

108 — f ← 1

109 — |ΔSH| < ΔSHs ? — NO
YES

110 — SH ≧ 0 ? — NO
YES

111 — F ≧ Fs ? — NO
YES

112 — To ≧ Tos ? — NO
YES

113 — Detect change in state

114 — Calculate prediction

115 — Refrigerant has leaked? — NO
YES

116 — Indication

117 — Disable operation

**Return**

FIG. 5

Start (Heating operation)

101 · f = 0 ? — NO

YES

102 · Calculate operation time t

103 · t ≧ t1 ? — NO

YES

104 · |ΔSH| < ΔSHs ? — NO

YES

105 · SH ≧ 0 ? — NO

YES

106 · F ≧ Fs ? — NO

YES

107 · Record initial state

108 · f ← 1

201 · R ≧ Rs ? — NO

YES

109 · |ΔSH| < ΔSHs ? — NO

YES

110 · SH ≧ 0 ? — NO

YES

111 · F ≧ Fs ? — NO

YES

113 · Detect change in state

114 · Calculate prediction

115 · Refrigerant has leaked? — NO

YES

116 · Indication

117 · Disable operation

Return

F I G. 6

| Operating rate | Q,SH | | Determination of operating rate | Determination of leakage |
|---|---|---|---|---|
| 100% | Small deviation | | OK | Implemented |
| 75% | Small deviation | | OK | Implemented |
| 50% | Small deviation | | OK | Implemented |
| 30% | Small deviation | | OK | Implemented |
| 15% | Large deviation | | NG | Not implemented |

## F I G. 7

Start (Heating operation)

301 — $t \leqq t2$ ? — NO

YES

302 — $|\Delta Qx| < Qs1$ continued during t3 ? — NO

YES

303 — $Q \neq Qmax$ ? — NO

YES

304 — $R < Rs$ ? — NO

YES

305 — $Rs \leftarrow R$

Return

## F I G. 8

F I G. 9

O Regular amount of refrigerant

△ Refrigerant equivalent to leakage of 20%

F I G. 10

Start (Cooling operation)

101
f = 0 ? — NO
↓ YES

102
Calculate operation time t

103
t ≧ t1 ? — NO
↓ YES

401
$|\Delta Qx| \leqq Qs2$ continued during t4? — NO
↓ YES

105
SH ≧ 0 ? — NO
↓ YES

106
F ≧ Fs ? — NO
↓ YES

Record initial state ~107

f ← 1 ~108

402
$|\Delta Qx| \leqq Qs2$ continued during t4 ? — NO
↓ YES

110
SH ≧ 0 ? — NO
↓ YES

111
F ≧ Fs ? — NO
↓ YES

112
To ≧ Tos ? — NO
↓ YES

Detect change in state ~113

Calculate prediction ~114

115
Refrigerant has leaked? — NO
↓ YES

Indication ~116

Disable operation ~117

Return

FIG. 11

F I G. 12

## INTERNATIONAL SEARCH REPORT

| International application No. |
| --- |
| PCT/JP2015/050355 |

**A. CLASSIFICATION OF SUBJECT MATTER**
*F25B49/02*(2006.01)i, *F24F11/02*(2006.01)i, *F25B5/02*(2006.01)i, *F25B6/02* (2006.01)i, *F25B13/00*(2006.01)i

According to International Patent Classification (IPC) or to both national classification and IPC

**B. FIELDS SEARCHED**

Minimum documentation searched (classification system followed by classification symbols)
F25B49/02, F24F11/02, F25B5/02, F25B6/02, F25B13/00

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 8-121917 A (Hitachi, Ltd.),<br>17 May 1996 (17.05.1996),<br>paragraphs [0015] to [0055]; fig. 1 to 13<br>(Family: none) | 1-2,4-5<br>3 |
| Y | JP 2-217738 A (Mitsubishi Electric Corp.),<br>30 August 1990 (30.08.1990),<br>page 5, upper left column, line 15 to upper<br>right column, line 6<br>& US 4987747 A    & EP 364834 A2<br>& KR 10-1992-0008504 B | 1-2,4-5 |

☒ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 April 2015 (02.04.15) | 14 April 2015 (14.04.15) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | |
| | Telephone No. |

Form PCT/ISA/210 (second sheet) (July 2009)

**INTERNATIONAL SEARCH REPORT**

| International application No. |
| --- |
| PCT/JP2015/050355 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 7-234044 A  (Matsushita Electric Industrial Co., Ltd.), 05 September 1995 (05.09.1995), paragraphs [0011], [0019] to [0020], [0023]; fig. 7 (Family: none) | 4 |
| A | JP 8-21675 A  (Hitachi, Ltd.), 23 January 1996 (23.01.1996), entire text; all drawings (Family: none) | 1-5 |
| A | JP 2008-164265 A  (Hitachi Appliances, Inc.), 17 July 2008 (17.07.2008), paragraph [0027] & EP 1942307 A2        & CN 101216231 A | 1-5 |
| A | US 5301514 A  (GENERAL ELECTRIC CO.), 12 April 1994 (12.04.1994), entire text; all drawings (Family: none) | 1-5 |

Form PCT/ISA/210 (continuation of second sheet) (July 2009)

## INTERNATIONAL SEARCH REPORT

| International application No. |
|---|
| PCT/JP2015/050355 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:

    The matter common to the invention in claim 1 and the inventions in claims 6-10 is "a refrigeration cycle which returns a refrigerant discharged from a compressor to the compressor through a condenser", "an expansion valve" and "an evaporator".

    However, the search revealed that above-said matter is disclosed in JP 8-121917 A (Hitachi, Ltd.) and therefore is not novel, and as a result, the matter is not a special technical feature within the meaning of PCT Rule 13.2, second sentence.

(Continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
   1-5

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2015/050355

Continuation of Box No.III of continuation of first sheet(2)

Therefore, the above-said matter is not a same or corresponding special technical feature.

Consequently, there is no same or corresponding special technical feature between the invention of claim 1 and the inventions of claims 6-10.

Accordingly, on the basis of the special technical features at the time of preparation of this international search report, claims are classified into two inventions each of which has a special technical feature indicated below.

First invention: the inventions of claims 1-5

A refrigeration cycle device provided with: "a plurality of expansion valves, and a plurality of evaporators connected to the expansion valves, respectively"; and "a detection unit which estimates a first total opening degree at a first point in time of the plurality of expansion valves when it is assumed that there is no refrigerant leakage in the refrigeration cycle on the basis of the amount of change between a first state quantity of the refrigeration cycle at the first point in time and a second state quantity of the refrigeration cycle at a second point in time earlier than the first point in time, and detects the refrigerant leakage of the refrigeration cycle by a comparison between a second total opening degree that is an actual total opening degree at the first point in time of the plurality of expansion valves and the first total opening degree".

Second invention: the inventions of claims 6-10

A refrigeration cycle device provided with "a detection unit which estimates a first supercooling amount at a first point in time of the condenser when it is assumed that there is no refrigerant leakage in the refrigeration cycle on the basis of the amount of change between a first state quantity of the refrigeration cycle at the first point in time and a second state quantity of the refrigeration cycle at a second point in time earlier than the first point in time, and detects the refrigerant leakage of the refrigeration cycle by a comparison between a second supercooling amount that is an actual supercooling amount at the first point in time of the condenser and the first supercooling amount".

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008164265 A